# EUROPÄISCHE PATENTSCHRIFT

(11) **EP 2 292 409 B1**
(45) Veröffentlichungstag und Bekanntmachung des Hinweises auf die Patenterteilung: **16.11.2011**
(21) Anmeldenummer: 09169508.0
(22) Anmeldetag: 04.09.2009
(51) Int. Cl.: B29C 51/26, B23Q 16/02, B23Q 16/04, B29C 33/30, F16B 7/04, B29C 51/30

(54) **Werkzeugträger, Werkzeug und Arbeitsstation mit Werkzeugträger und daran befestigtem Werkzeug**
Tool holder, tool and work station with tool holder and tool attached to the same
Porte-outil, outil et station de travail dotée d'un porte-outil et outil étant fixé sur celle-ci

(43) Veröffentlichungstag der Anmeldung: 09.03.2011
(73) Patentinhaber: Uhlmann Pac-Systeme GmbH & Co. KG, 88471 Laupheim (DE)
(72) Erfinder: Ruf, Reinhold, 88471 Laupheim (DE); Rodi, Wolfgang, 88471 Laupheim / Baustetten (DE); Pöhler, Hans-Martin, 89150 Laichingen (DE); Hiller, Uwe, 88483 Burgrieden (DE)
(74) Vertreter: Wächter, Jochen

(56) Entgegenhaltungen:
- DE-B3-102006 004 093
- US-A- 1 393 083

## Beschreibung

Die vorliegenden Erfindung betrifft einen Werkzeugträger bzw. ein Werkzeug gemäß den Oberbegriffe der Ansprüche 1 bzw. 6. Die vorliegende Erfindung betrifft ebenfalls eine Arbeitsstation mit diesem Werkzeugträger und diesem daran befestigtem Werkzeug.

In vielen Industriebereichen ist eine exakte und sichere Befestigung eines Werkzeuges an einem Werkzeugträger unumgänglich. Arbeitsstationen, die aus einem Werkzeugträger und einem daran befestigten Werkzeug bestehen, müssen oftmals auf Bruchteile von Millimetern genau positioniert sein, um die jeweiligen Arbeiten mit ausreichender Genauigkeit durchführen zu können.

Im Bereich der Pharmaindustrie ist eine Vielzahl von nacheinander angeordneten Arbeitsstationen notwendig, um beispielsweise Blisterverpackungen herzustellen. Da hierbei die Werkzeuge oftmals auf unterschiedliche Formate der Blisterverpackungen angepasst sein müssen, ist es notwendig, die Werkzeuge entsprechend den Vorgaben auszutauschen.

Zu diesem Zweck existiert eine Vielzahl von unterschiedlichen Befestigungsmöglichkeiten zwischen Werkzeugträger und Werkzeug, welche eine Austauschbarkeit der Werkzeuge gewährleisten und gleichzeitig den Justageaufwand so gering wie möglich halten sollen.

Ein Beispiel eines solchen Befestigungsmechanismus ist in DE 10 2006 004 093 B3 gezeigt. Hierbei ist in der Oberfläche des Werkzeugs ein Konus ausgebildet, der von einem Klemmbolzen beaufschlagt wird, welcher eine dem Konus entsprechende Druckfläche aufweist. Damit wird eine sichere Verbindung zwischen Werkzeugträger und Werkzeug gewährleistet, während ein Austausch von Werkzeugen auf relativ einfache Weise erfolgen kann. Allerdings sind auch hier gewisse Toleranzprobleme noch nicht vollständig überwunden.

Eine weitere Vorrichtung zum Befestigen eines Werkzeugs in einer Halterung ist aus der US 1,393,083 bekannt. Hierbei wird das Werkzeug in eine Führung aus zwei Schienen mit jeweils zwei Schenkeln geschoben, die nach hinten durch einen Bolzen begrenzt ist. Anschließend wird das Werkzeug durch eine schräg eingedrehte Schraube in der Halterung fixiert. Mit dieser Konstruktion wäre eine Fixierung, die dauerhaft Abweichungen selbst von Bruchteilen von Millimetern ausschließt, vor allem aufgrund des möglichen seitlichen Spiels des Werkzeugs in der Halterung kaum zu realisieren.

Der vorliegenden Erfindung liegt daher die Aufgabe zugrunde, einen Werkzeugträger und ein daran zu befestigendes Werkzeug zu schaffen, die einen einfachen Austausch des Werkzeugs ermöglichen und gleichzeitig eine hochgenaue Selbstjustage des Werkzeugs im Werkzeugträger liefern.

Diese Aufgabe wird durch die Merkmale der Ansprüche 1, 6 und 9 gelöst.

Erfindungsgemäß weist der Werkzeugträger einen Grundkörper auf, außerdem ein vom Grundkörper nach oben abragendes Anschlagelement, das eine erste Anschlagfläche für ein Werkzeug definiert, wobei die erste Anschlagfläche in einer ersten Ebene des Werkzeugträgers liegt. Außerdem weist der Werkzeugträger zwei vom Grundkörper nach oben abragende Führungselemente für Führungsabschnitte des Werkzeugs auf, wobei jedes Führungselement zwei Schenkel aufweist, von denen sich jeweils ein erster Schenkel senkrecht vom Grundkörper nach oben erstreckt und ein zweiter Schenkel hiervon unter einem rechten Winkel derart abzweigt, dass die zweiten Schenkel der beiden Führungselemente einander zugewandt sind. Dabei definiert einer der ersten Schenkel eine zweite Anschlagfläche für das Werkzeug, die in einer zweiten Ebene des Werkzeugträgers liegt, welche zur ersten Ebene des Werkzeugträgers senkrecht ist. Außerdem definiert der zugehörige zweite Schenkel eine dritte Anschlagfläche für das Werkzeug, die in einer dritten Ebene des Werkzeugträgers liegt, welche zur ersten Ebene und zur zweiten Ebene des Werkzeugträgers senkrecht ist. Der Werkzeugträger weist zudem einen im Grundkörper versenkbaren und aus ihm ausfahrbaren Bolzen auf, welcher zur Einführung in eine Aufnahme des Werkzeugs dient, wobei der Bolzen eine schräge aktive Druckfläche aufweist, die eine vierte Ebene definiert, welche jede der drei Ebenen des Werkzeugträgers unter einem spitzen Winkel schneidet, wodurch die aktive Druckfläche beim Ausfahren des Bolzens eine Kraftkomponente in Richtung jeder der drei Anschlagflächen liefert.

Das entsprechende Werkzeug zur Aufnahme im Werkzeugträger weist einen Grundkörper mit einer ersten Schulterfläche auf, die in einer ersten Ebene des Werkzeugs liegt, und außerdem zwei von einem unteren Randbereich des Grundkörpers seitlich in entgegengesetzter Richtung abragende Führungsabschnitte zur Aufnahme in Führungselementen des Werkzeugträgers. Dabei weist einer der Führungsabschnitte eine zweite Schulterfläche auf, die in einer zweiten Ebene des Werkzeugs liegt, welche zur ersten Ebene senkrecht ist. Außerdem weist dieser Führungsabschnitt eine dritte Schulterfläche auf, die in einer dritten Ebene des Werkzeugs liegt, welche zur ersten Ebene und zur zweiten Ebene des Werkzeugs senkrecht ist. Das Werkzeug weist außerdem eine im Grundkörper angeordnete Aufnahme für einen Bolzen des Werkzeugträgers auf, wobei die Aufnahme eine schräge passive Druckfläche aufweist, die eine vierte Ebene definiert, welche jede der drei Ebenen des Werkzeugs unter einem spitzen Winkel schneidet.

Mit dieser Ausgestaltung wird eine hochpräzise Lagedefinition des Werkzeugs am Werkzeugträger möglich.

Eine besonders gute Kraftübertragung in Richtung jeder der drei Anschlagflächen des Werkzeugträgers wird gewährleistet, wenn die vierte Ebene des Werkzeugträgers die erste Ebene des Werkzeugträgers unter einem Winkel von zwischen 30° und 60° schneidet, die vierte Ebene des Werkzeugträgers die zweite Ebene des Werkzeugträgers unter einem Winkel von zwischen 30° und 60° schneidet, und die vierte Ebene des Werkzeugträgers die dritte Ebene des Werkzeugträgers unter einem Winkel von zwischen 30° und 60° schneidet. Entsprechend ist es vorteilhaft, wenn die vierte Ebene des Werkzeugs die erste Ebene des Werkzeugs unter einem Winkel von zwischen 30° und 60° schneidet, die vierte Ebene des Werkzeugs die zweite Ebene des Werkzeugs unter einem Winkel von zwischen 30° und 60° schneidet, und die vierte Ebene des Werkzeugs die dritte Ebene des Werkzeugs unter einem Winkel von zwischen 30° und 60° schneidet.

Eine besonders gleichmäßige Verteilung der durch die aktive Druckfläche des Werkzeugträgers auf die passive Druckfläche des Werkzeugs ausgeübten Kraft in Richtung der drei Anschlagflächen wird gewährleistet, wenn die Schnittwinkel jeweils zwischen 40° und 50° liegen, am meisten bevorzugt genau 45° betragen. In diesem Fall ist eine Symmetrie der Kraftkomponenten in Richtung der drei Anschlagflächen gegeben.

Der erfindungsgemäße Werkzeugträger weist einen Ausfahrmechanismus für den Bolzen auf, der vorzugsweise eine Gewindespindel aufweist. Auf diese Weise ist eine hochgenaue und definierte Bewegung des Bolzens möglich.

Um den Bolzen auf einfache und rein mechanische Weise auszufahren, ist die Gewindespindel vorzugsweise parallel zur dritten Ebene des Werkzeugträgers angeordnet und weist an ihrem vorderen Ende eine Kegelspitze auf, die auf eine schräge Wirkfläche am Bolzen wirkt.

Eine Arbeitsstation mit den Merkmalen des Anspruchs 9, welche einen erfindungsgemäßen Werkzeugträger und ein daran befestigtes erfindungsgemäßes Werkzeug aufweist, ist ebenfalls Gegenstand der Erfindung. Dabei fallen im zusammengesetzten Zustand der Arbeitsstation jeweils die erste, zweite, dritte und vierte Ebene des Werkzeugträgers mit der ersten, zweiten, dritten und vierten Ebene des Werkzeugs zusammen.

Im Bereich der Pharmaindustrie ist es bei der Herstellung von Blisterverpackungen besonders wichtig, dass eine Folienführung exakt zum Werkzeug ausgerichtet ist. Durch die Verwendung von unterschiedlichen Anschlägen ergeben sich auch hier vielfältige Toleranzprobleme, die eine manuelle Justierung erfordern.

Bei einer bevorzugten Ausführungsform der erfindungsgemäßen Arbeitsstation weist die Folienführung daher eine Schulter auf, die an einen Anschlag einer Führungssäule des Werkzeugs gedrückt ist. Auf diese Weise werden in Kombination mit der hochpräzisen Lagerung des Werkzeugs im Werkzeugträger die Summentoleranzen so klein, dass eine Nachjustage nicht mehr erforderlich ist.

Weitere Merkmale und Vorteile der vorliegenden Erfindung ergeben sich aus der nachfolgenden Beschreibung unter Bezugnahme auf die Zeichnungen.
- Fig. 1: ist eine Perspektivansicht einer Arbeitsstation mit Werkzeugträger und daran befestigtem Werkzeug;
- Fig. 2: ist eine Perspektivansicht des Werkzeugträgers aus Fig. 1;
- Fig. 3: ist eine Seitenansicht des Werkzeugträgers aus Fig. 2;
- Fig. 4: ist eine Perspektivansicht des Werkzeugs aus Fig. 1;
- Fig. 5: ist eine Ansicht von unten des Werkzeugs aus Fig. 4;
- Fig. 6: ist eine Querschnittsansicht der Arbeitsstation aus Fig. 1;
- Fig. 7: ist eine Perspektivansicht einer Arbeitsstation mit Folienführung; und
- Fig. 8: ist eine schematische Darstellung von vier verschiedenen Ebenen des Werk- zeugträgers bzw. des Werkzeugs und deren relativer Anordnung zueinander.

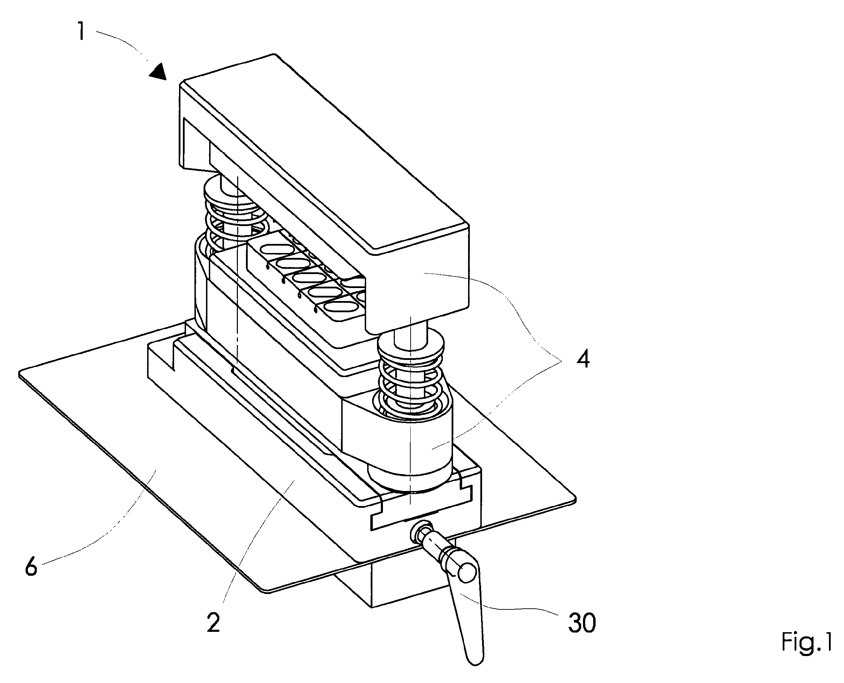

In Fig. 1 ist eine Arbeitsstation 1 dargestellt, welche in der pharmazeutischen Industrie Anwendung findet. Die Arbeitsstation 1 weist einen Werkzeugträger 2 und ein daran befestigtes Werkzeug 4 auf. Der Werkzeugträger 2 ist dabei in einem festen Stationsrahmen 6 gelagert.

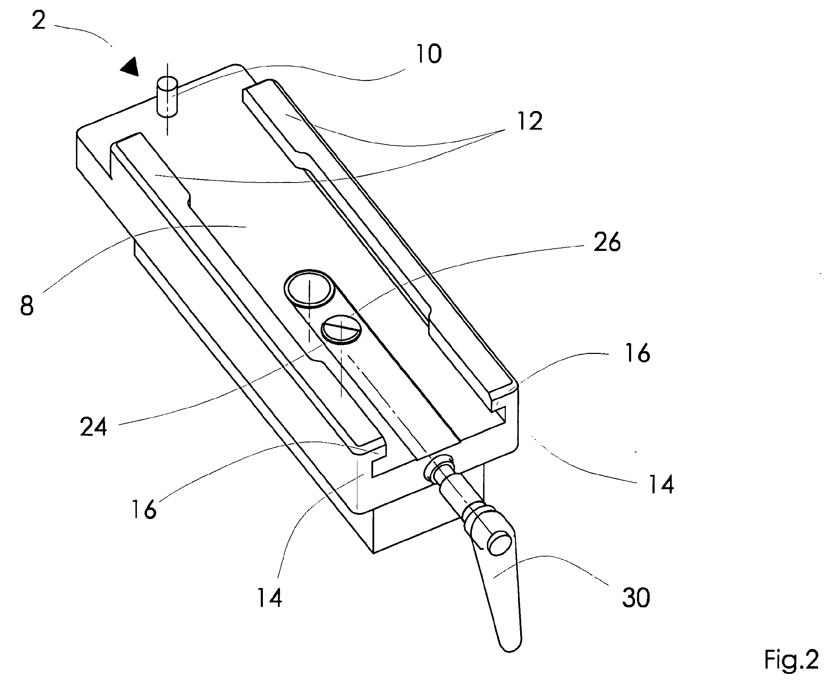

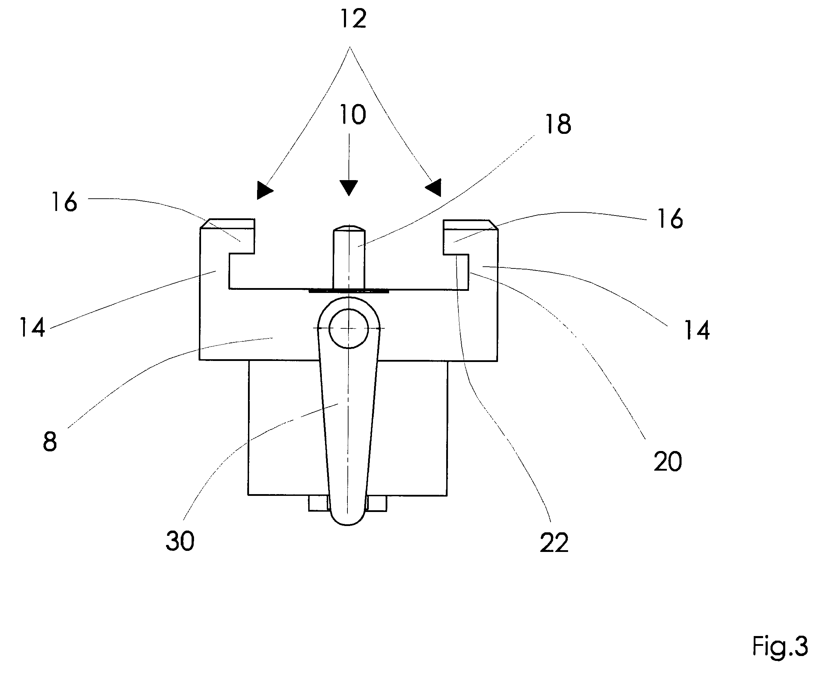

In Fig. 2 ist der Werkzeugträger 2 im Detail dargestellt. Der Werkzeugträger 2 umfasst einen Grundkörper 8, ein vom Grundkörper 8 nach oben abragendes Anschlagelement 10 sowie zwei vom Grundkörper 8 nach oben abragende Führungselemente 12. Das Anschlagelement 10 ist im vorliegenden Beispielsfall als Bolzen ausgestaltet, kann aber auch als langgestreckte Schulter oder auf beliebige ähnliche Weise ausgestaltet sein. Jedes der beiden Führungselemente 12 weist einen ersten Schenkel 14 auf, der sich senkrecht vom Grundkörper 8 nach oben erstreckt (siehe auch Fig. 3), sowie einen zweiten Schenkel 16, der unter einem rechten Winkel vom ersten Schenkel 14 derart abzweigt, dass die zweiten Schenkel 16 der beiden Führungselemente 12 einander zugewandt sind.

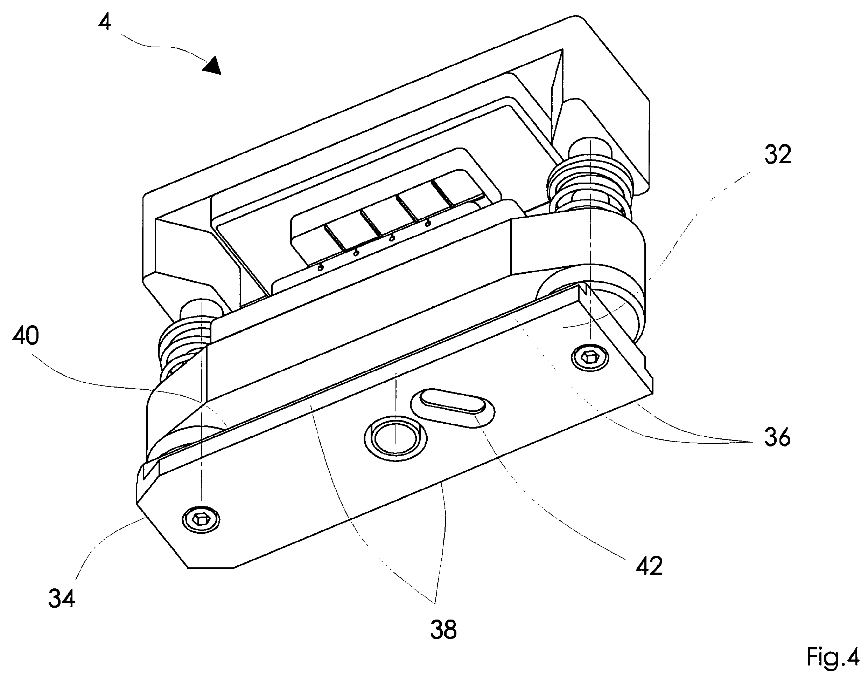

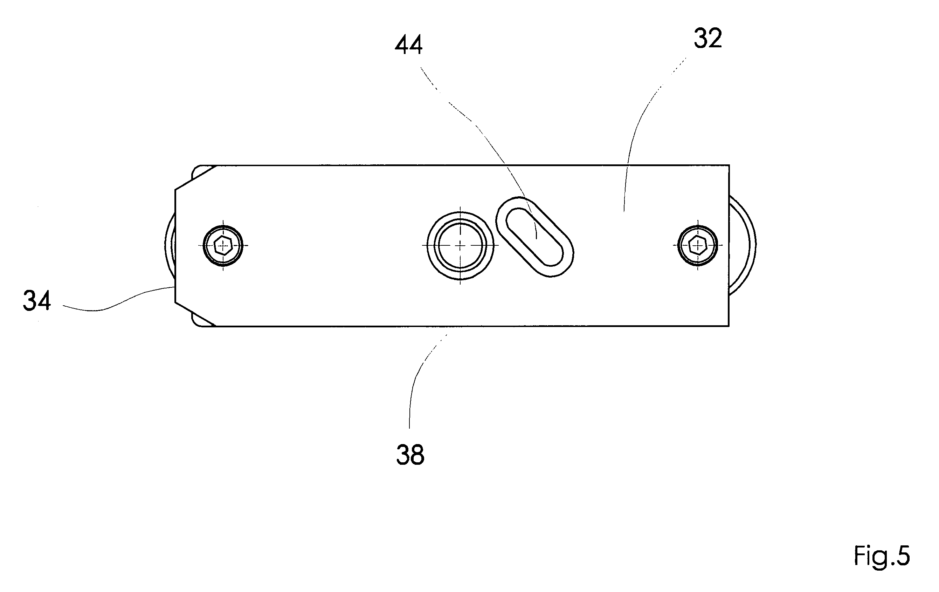

Wie am besten aus Fig. 3 ersichtlich ist, definiert das Anschlagelement 10 eine erste Anschlagfläche 18 für das Werkzeug 4, welches weiter unten unter Bezugnahme auf Fig. 4 und 5 näher beschrieben wird. Im dargestellten Beispielsfall definiert der erste Schenkel 14 des im Bild rechts angeordneten Führungselements 12 eine zweite Anschlagfläche 20 für das Werkzeug 4, und der zugehörige zweite Schenkel 16 definiert eine dritte Anschlagfläche 22 für das Werkzeug 4.

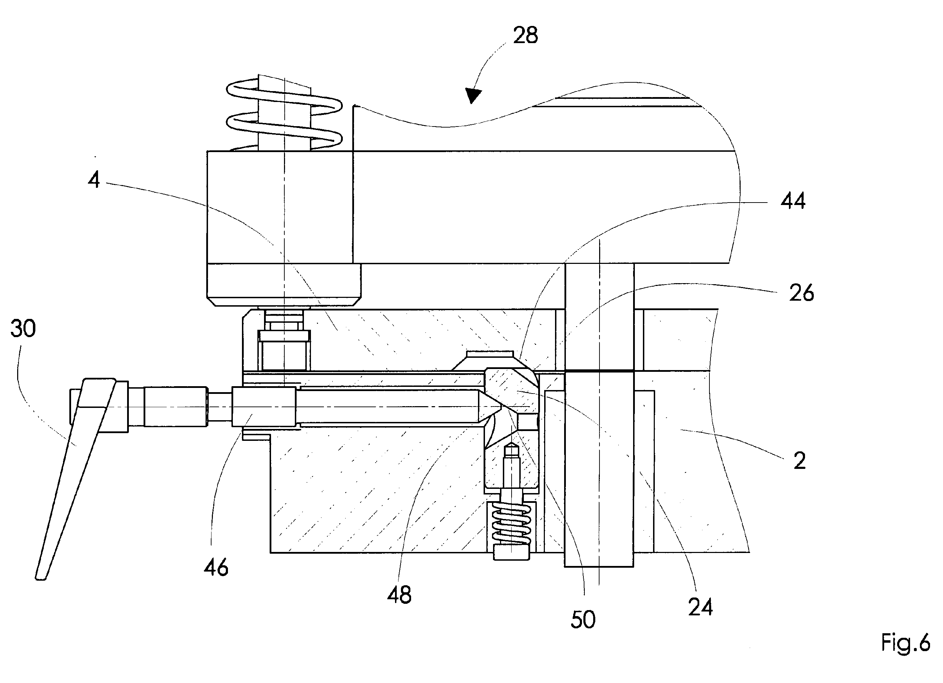

Der Werkzeugträger 2 umfasst außerdem einen im Grundkörper 8 versenkten und aus ihm ausfahrbaren Bolzen 24, der eine schräge aktive Druckfläche 26 aufweist. Der Bolzen 24 wird mittels eines weiter unten unter Bezugnahme auf Fig. 6 näher beschriebenen Ausfahrmechanismus 28 ausgefahren, der über ein Betätigungselement 30, hier in Form eines Klemmhebels, betätigt wird.

Das zugehörige Werkzeug 4 ist in Fig. 4 und 5 im Detail dargestellt. Das Werkzeug 4 umfasst einen Grundkörper 32, der eine erste Schulterfläche 34 definiert, welche zur Anlage an der ersten Anschlagfläche 18 des Werkzeugträgers 2 dient. In einem unteren Randbereich des Grundkörpers 32 ragen seitlich in entgegengesetzter Richtung zwei Führungsabschnitte 36 ab, welche zur Aufnahme in den Führungselementen 12 des Werkzeugträgers 2 vorgesehen sind. Einer der beiden Führungsabschnitte 36, im dargestellten Beispielsfall der Fig. 4 der hinten angeordnete Führungsabschnitt 36, definiert eine zweite Schulterfläche 38, die zur Anlage an der zweiten Anschlagfläche 20 des Werkzeugträgers 2 dient. Schließlich definiert derselbe Führungsabschnitt 36 in seinem oberen Bereich eine dritte Schulterfläche 40, die senkrecht zur zweiten Schulterfläche 38 verläuft und zur Anlage an der dritten Anschlagfläche 22 des Werkzeugträgers 2 vorgesehen ist, wie am besten aus Fig. 1 hervorgeht.

Im Grundkörper 32 des Werkzeugs 4 ist außerdem eine Aufnahme 42 für den Bolzen 24 des Werkzeugträgers 2 vorgesehen, die eine schräge passive Druckfläche 44 aufweist, welche mit der schrägen aktiven Druckfläche 26 des Bolzens 24 zusammenwirkt. Dies geht besonders deutlich aus Fig. 6 hervor.

In Fig. 6 ist der Ausfahrmechanismus 28 des Bolzens 24 in Querschnittsansicht dargestellt. Er umfasst eine Gewindespindel 46, welche über das Betätigungselement 30 betätigbar ist und an ihrem vorderen Ende eine Kegelspitze 48 aufweist. Die Kegelspitze 48 wirkt auf eine schräge Wirkfläche 50, die am Bolzen 24 angeordnet ist. Im vorliegenden Beispielsfall ist die Wirkfläche 50 durch eine Ausnehmung im Bolzen 24 geschaffen. Durch Betätigung des Betätigungselements 30 wird die Gewindespindel 46 nach vorne getrieben, sodass die Kegelspitze 48 auf die schräge Wirkfläche 50 im Bolzen 24 wirkt und diesen nach oben drückt. Dabei wirkt die aktive Druckfläche 26 am Bolzen 24 auf die passive Druckfläche 44 in der Aufnahme 42 des Werkzeugs 4 und drückt das Werkzeug 4 so mit jeweils einer Kraftkomponente in Richtung der ersten Anschlagfläche 18, der zweiten Anschlagfläche 20 und der dritten Anschlagfläche 22.

Vorzugsweise ist hierbei eine Arretierung des Betätigungselements 30 möglich. Außerdem kann der Bolzen 24 mit einem Federelement (nicht dargestellt) beaufschlagt sein, das ihn nach oben drückt. Neben der dargestellten Ausführungsform sind viele weitere Möglichkeiten im Rahmen der Erfindung denkbar, wie der Bolzen 24 auf gesteuerte Weise nach oben und wieder zurück bewegt werden kann. Beispielsweise kann der Bolzen 24 auch direkt über einen Antrieb bewegt werden.

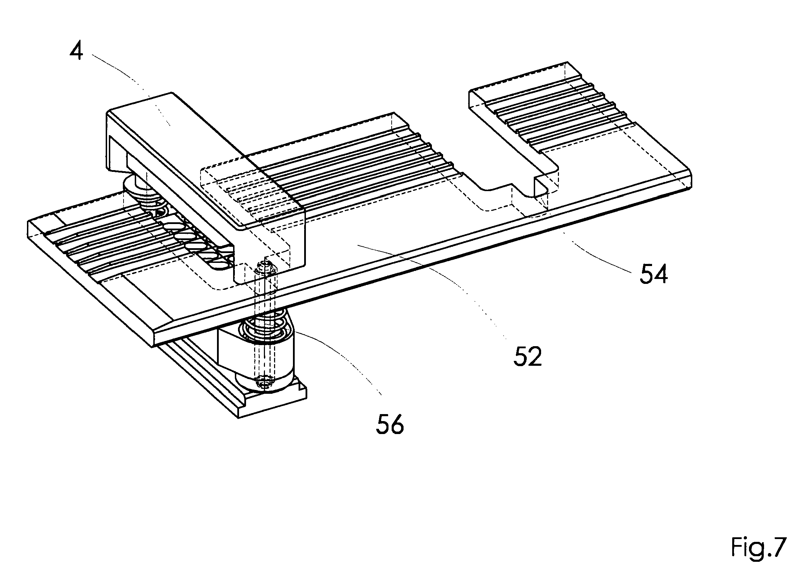

In Fig. 7 ist eine Arbeitsstation 1 mit Werkzeugträger 2, Werkzeug 4 und einer Folienführung 52 dargestellt. Die Folienführung 52 weist dabei eine Schulter 54 auf, die an einen entsprechenden Anschlag einer Führungssäule 56 des Werkzeugs 4 gedrückt und dann festgelegt wird. Damit sind die Lageverhältnisse zwischen Werkzeugträger 2, Werkzeug 4 und Folienführung 52 innerhalb der Arbeitsstation 1 hochpräzise festgelegt.

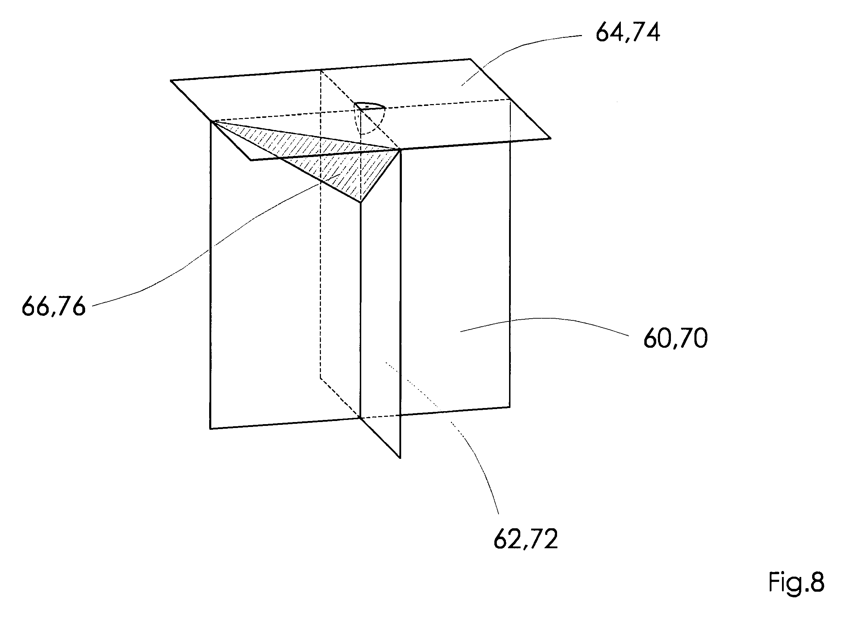

In Fig. 8 verdeutlicht die Lageverhältnisse der Anschlagflächen 18, 20, 22 und der aktiven Druckfläche 26 im Werkzeugträger 2 relativ zueinander in schematischer Darstellung. Ebenso lässt sich Fig. 8 als schematische Darstellung der Lageverhältnisse zwischen erster Schulterfläche 34, zweiter Schulterfläche 38, dritter Schulterfläche 40 und passiver Druckfläche 44 im Werkzeug 4 lesen.

Zunächst soll die Zeichnung am Beispiel der Verhältnisse im Werkzeugträger 2 erläutert werden. Die erste Anschlagfläche 18 liegt in einer ersten Ebene 60 des Werkzeugträgers 2. Die zweite Anschlagfläche 20 liegt in einer zweiten Ebene 62 des Werkzeugträgers 2, welche zur ersten Ebene 60 des Werkzeugträgers 2 senkrecht ist. Die dritte Anschlagfläche 22 liegt in einer dritten Ebene 64 des Werkzeugträgers 2, welche zur ersten Ebene 60 und zur zweiten Ebene 62 des Werkzeugträgers 2 senkrecht ist. Die schräge aktive Druckfläche 26 am Bolzen 24 definiert eine vierte Ebene 66 des Werkzeugträgers 2, welche die erste Ebene 60, die zweite Ebene 62 und die dritte Ebene 64 jeweils unter einem spitzen Winkel schneidet. Dadurch wird gewährleistet, dass die aktive Druckfläche 26 beim Ausfahren des Bolzens 24 eine Kraftkomponente in Richtung jeder der drei Anschlagflächen 18, 20, 22 liefert.

Die Winkelverhältnisse der vierten Ebene 66 zu den übrigen drei Ebenen 60, 62, 64 sind an sich in gewissem Rahmen beliebig wählbar, bevorzugt ist allerdings, wenn jeder der drei Schnittwinkel (zwischen der vierten Ebene 66 und der ersten Ebene 60, zwischen der vierten Ebene 66 und der zweiten Ebene 62, und zwischen der vierten Ebene 66 und der dritten Ebene 64) zwischen 30° und 60° liegt. Um eine gleichmäßige Kraftausübung in Richtung jeder der Anschlagflächen 18, 20, 22 zu gewährleisten, ist ein Winkel zwischen 40° und 50° noch weiter bevorzugt. Wenn alle drei Winkel 45° betragen, ist eine vollkommen gleichmäßige Verteilung der Kraftkomponenten in die drei Richtungen erreicht. Diese ideale Ausgestaltung ist in der Praxis aber nicht unbedingt notwendig.

Wie bereits oben erwähnt, lässt sich Fig. 8 genauso auch auf die Lageverhältnisse im Werkzeug 4 lesen. Hierzu muss zunächst festgestellt werden, dass die erste Schulterfläche 34 in einer ersten Ebene 70 des Werkzeugs 4 liegt, dass die zweite Schulterfläche 38 in einer zweiten Ebene 72 des Werkzeugs 4 liegt, dass die dritte Schulterfläche 40 in einer dritten Ebene 74 des Werkzeugs 4 liegt, und dass eine vierte Ebene 76 des Werkzeugs 4 durch die schräge passive Druckfläche 44 definiert wird. In diesem Fall kann die erste Ebene 60 des Werkzeugträgers 2 durch die erste Ebene 70 des Werkzeugs 4 ersetzt werden, die zweite Ebene 62 des Werkzeugträgers 2 durch die zweite Ebene 72 des Werkzeugs 4, die dritte Ebene 64 des Werkzeugsträgers 2 durch die dritte Ebene 74 des Werkzeugs 4 und die vierte Ebene 66 des Werkzeugträgers 2 durch die vierte Ebene 76 des Werkzeugs 4.

Selbstverständlich fallen im zusammengebauten Zustand der Arbeitsstation 1 die so definierten ersten Ebenen 60, 70, zweiten Ebenen 62, 72, dritten Ebenen 64, 74 und vierten Ebenen 66 und 76 von Werkzeugträger 2 und Werkzeug 4 zusammen, da die jeweiligen Anschlagflächen 18, 20. 22 an den entsprechenden Schulterflächen 34, 38, 40 anliegen und die aktive Druckfläche 26 auf die passive Druckfläche 44 drückt.

## Patentansprüche

1. Werkzeugträger (2) mit
einem Grundkörper (8);
einem vom Grundkörper (8) nach oben abragenden Anschlagelement (10), das eine erste Anschlagfläche (18) für ein Werkzeug (4) definiert, wobei die erste Anschlagfläche (18) in einer ersten Ebene (60) des Werkzeugträgers (2) liegt;
zwei vom Grundkörper (8) nach oben abragende Führungselemente (12) für Führungsabschnitte (36) des Werkzeugs (4), wobei jedes Führungselement (12) zwei Schenkel (14, 16) aufweist, von denen sich jeweils ein erster Schenkel (14) senkrecht vom Grundkörper (8) nach oben erstreckt und ein zweiter Schenkel (16) hiervon unter einem rechten Winkel derart abzweigt, dass die zweiten Schenkel (16) der beiden Führungselemente (12) einander zugewandt sind;
wobei einer der ersten Schenkel (14) eine zweite Anschlagfläche (20) für das Werkzeug (4) definiert, die in einer zweiten Ebene (62) des Werkzeugträgers (2) liegt, welche zur ersten Ebene (60) des Werkzeugträgers (2) senkrecht ist;
und wobei der zugehörige zweite Schenkel (16) eine dritte Anschlagfläche (22) für das Werkzeug (4) definiert, die in einer dritten Ebene (64) des Werkzeugträgers (2) liegt, welche zur ersten Ebene (60) und zur zweiten Ebene (62) des Werkzeugträgers (2) senkrecht ist; und mit
einem im Grundkörper (8) versenkbaren und aus ihm ausfahrbaren Bolzen (24), welcher zur Einführung in eine Aufnahme (42) des Werkzeugs (4) dient, wobei der Bolzen (24) eine schräge aktive Druckfläche (26) aufweist, die eine vierte Ebene (66) definiert, welche jede der drei Ebenen (60, 62, 64) des Werkzeugträgers (2) schneidet, wobei die vierte Ebene (66) die erste Ebene (60) und die dritte Ebene (64) unter einem spitzen Winkel schneidet;
**dadurch gekennzeichnet, dass**
die vierte Ebene (66) auch die zweite Ebene (62) des Werkzeugträgers unter einem spitzen Winkel schneidet, so dass das Ausfahren des Bolzens (24) eine Kraftkomponente in Richtung jeder der drei Anschlagflächen (18, 20, 22) liefert.

2. Werkzeugträger (2) nach Anspruch 1, **dadurch gekennzeichnet, dass** die vierte Ebene (66) die erste Ebene (60) unter einem Winkel von zwischen 30° und 60° schneidet, dass die vierte Ebene (66) die zweite Ebene (62) unter einem Winkel von zwischen 30° und 60° schneidet, und dass die vierte Ebene (66) die dritte Ebene (64) unter einem Winkel von zwischen 30° und 60° schneidet.

3. Werkzeugträger (2) nach Anspruch 2, **dadurch gekennzeichnet, dass** die vierte Ebene (66) die erste Ebene (60) unter einem Winkel von zwischen 40° und 50°, bevorzugt 45°, schneidet, dass die vierte Ebene (66) die zweite Ebene (62) unter einem Winkel von zwischen 40° und 50°, bevorzugt 45°, schneidet, und dass die vierte Ebene (66) die dritte Ebene (64) unter einem Winkel von zwischen 40° und 50°, bevorzugt 45°, schneidet.

4. Werkzeugträger (2) nach einem der vorangehenden Ansprüche, **dadurch gekennzeichnet, dass** sie einen Ausfahrmechanismus (28) für den Bolzen (24) aufweist, der eine Gewindespindel (46) aufweist.

5. Werkzeugträger (2) nach Anspruch 4, **dadurch gekennzeichnet, dass** die Gewindespindel (46) parallel zur dritten Ebene (64) des Werkzeugträgers (2) angeordnet ist und an ihrem vorderen Ende eine Kegelspitze (48) aufweist, die auf eine schräge Wirkfläche (50) am Bolzen (24) wirkt.

6. Werkzeug (4) zur Aufnahme in einem Werkzeugträger (2), mit
einem Grundkörper (32) mit einer ersten Schulterfläche (34), die in einer ersten Ebene (70) des Werkzeugs (4) liegt;
zwei vom Grundkörper (32) seitlich in entgegengesetzter Richtung abragenden Führungsabschnitten (36) zur Aufnahme in Führungselementen (12) des Werkzeugträgers (2),
wobei einer der Führungsabschnitte (36) eine zweite Schulterfläche (38) aufweist, die in einer zweiten Ebene (72) des Werkzeugs (4) liegt, welche zur ersten Ebene (70) senkrecht ist,
und wobei dieser Führungsabschnitt (36) eine dritte Schulterfläche (40) aufweist, die in einer dritten Ebene (74) des Werkzeugs (4) liegt, welche zur ersten Ebene (70) und zur zweiten Ebene (72) des Werkzeugs (4) senkrecht ist; und mit
einer im Grundkörper (32) angeordneten Aufnahme (42) für einen Bolzen (24) des Werkzeugträgers (2), wobei die Aufnahme (42) eine schräge passive Druckfläche (44) aufweist, die eine vierte Ebene (76) definiert, welche jede der drei Ebenen (70, 72, 74) des Werkzeugs (4) schneidet, wobei die vierte Ebene (76) die erste Ebene (70) und die dritte Ebene (74) unter einem spitzen Winkel schneidet,
**dadurch gekennzeichnet, dass**
die vierte Ebene (76) auch die zweite Ebene (72) des Werkzeugs unter einem spitzen Winkel schneidet.

7. Werkzeug (4) nach Anspruch 6, **dadurch gekennzeichnet, dass** die vierte Ebene (76) die erste Ebene (70) unter einem Winkel von zwischen 30° und 60° schneidet, dass die vierte Ebene (76) die zweite Ebene (72) unter einem Winkel von zwischen 30° und 60° schneidet, und dass die vierte Ebene (76) die dritte Ebene (74) unter einem Winkel von zwischen 30° und 60° schneidet.

8. Werkzeug (4) nach Anspruch 7, **dadurch gekennzeichnet, dass** die vierte Ebene (76) die erste Ebene (70) unter einem Winkel von zwischen 40° und 50°, bevorzugt 45°, schneidet, dass die vierte Ebene (76) die zweite Ebene (72) unter einem Winkel von zwischen 40° und 50°, bevorzugt 45°, schneidet, und dass die vierte Ebene (76) die dritte Ebene (74) unter einem Winkel von zwischen 40° und 50°, bevorzugt 45°, schneidet.

9. Arbeitsstation (1) mit einem Werkzeugträger (2) nach einem der Ansprüche 1 bis 5 und einem daran befestigten Werkzeug (4) nach einem der Ansprüche 6 bis 8.

10. Arbeitsstation (1) nach Anspruch 9, **dadurch gekennzeichnet, dass** die erste (60), zweite (62), dritte (64) und vierte (66) Ebene des Werkzeugträgers (2) im zusammengesetzten Zustand der Arbeitsstation (1) jeweils mit der ersten (70), zweiten (72), dritten (74) und vierten (76) Ebene des Werkzeugs (4) zusammenfallen.

11. Arbeitsstation (1) nach Anspruch 9 oder 10, **dadurch gekennzeichnet, dass** sie eine Folienführung (52) aufweist, welche eine Schulter (54) aufweist, die an einen Anschlag einer Führungssäule (56) des Werkzeugs (4) gedrückt ist.

## Claims

1. Tool holder (2) comprising a base body (8); a stop element (10) projecting upwards from the base body (8), which stop element defines a first stop surface (18) for a tool (4), the first stop surface (18) lying in a first plane (60) of the tool holder (2); two guiding elements (12) which project upwards from the base body (8) for guiding portions (36) of the tool (4), each guiding element (12) having two limbs (14, 16), of which a first limb (14) of each extends vertically upwards from the base body (8) and a second limb (16) of each branches off therefrom at a right angle in such a way that the second limbs (16) of the two guiding elements (12) face one another; one of the first limbs (14) defining a second stop surface (20) for the tool (4), which second stop surface lies in a second plane (62) of the tool holder (2), which second plane is perpendicular to the first plane (60) of the tool holder (2); and the associated second limb (16) defining a third stop surface (22) for the tool (4), which third stop surface lies in a third plane (64) of the tool holder (2), which third plane is perpendicular to the first plane (60) and to the second plane (62) of the tool holder; and comprising a pin (24) which can be lowered into the base body (8) and extended therefrom, which pin is to be introduced into a recess (42) in the tool (4), the pin (24) having an angular active contact surface (26) which defines a fourth plane (66) which intersects each of the three planes (60, 62, 64) of the tool holder (2), the fourth plane (66) intersecting the first plane (60) and the third plane (64) at an acute angle; **characterised in that** the fourth plane (66) also intersects the second plane (62) of the tool holder at an acute angle in such a way that the extension of the pin (24) delivers a force component in the direction of each of the three stop surfaces (18, 20, 22).

2. Tool holder (2) according to claim 1, **characterised in that** the fourth plane (66) intersects the first plane (60) at an angle of between 30° and 60°, **in that** the fourth plane (66) intersects the second plane (62) at an angle of between 30° and 60°, and **in that** the fourth plane (66) intersects the third plane (64) at an angle of between 30° and 60°.

3. Tool holder (2) according to claim 2, **characterised in that** the fourth plane (66) intersects the first plane (60) at an angle of between 40° and 50°, preferably 45°, and **in that** the fourth plane (66) intersects the second plane (62) at an angle of between 40° and 50°, preferably 45°, and **in that** the fourth plane (66) intersects the third plane (64) at an angle of between 40° and 50°, preferably 45°.

4. Tool holder (2) according to any one of the preceding claims, **characterised in that** it comprises an extension mechanism (28) for the pin (24) which has a threaded spindle (46).

5. Tool holder (2) according to claim 4, **characterised in that** the threaded spindle (46) is arranged parallel to the third plane (64) of the tool holder (2) and comprises a cone point (48) at the front end thereof, which cone point acts on an angular work surface (50) of the pin (24).

6. Tool (4) to be received in a tool holder (2), comprising a base body (32) having a first shoulder surface (34) which lies in a first plane (70) of the tool (4); two guiding portions (36) which protrude laterally from the base body (32) in opposite directions to be received in guiding elements (12) of the tool holder (2), one of the guiding portions (36) having a second shoulder surface (38) which lies in a second plane (72) of the tool (4), which second plane is perpendicular to the first plane (70), and this guiding portion (36) having a third shoulder surface (40) which lies in a third plane (74) of the tool (4), which third plane is perpendicular to the first plane (70) and to the second plane (72) of the tool (4); and comprising a recess (42) for a pin (24) of the tool holder (2) arranged in the base body (32), the recess (42) comprising an angular passive contact surface (44) which defines a fourth plane (76) which intersects each of the three planes (70, 72, 74) of the tool (4), the fourth plane (76) intersecting the first plane (70) and the third plane (74) at an acute angle, **characterised in that** the fourth plane (76) also intersects the second plane (72) of the tool at an acute angle.

7. Tool (4) according to claim 6, **characterised in that** the fourth plane (76) intersects the first plane (70) at an angle of between 30° and 60°, **in that** the fourth plane (76) intersects the second plane (72) at an angle of between 30° and 60°, and **in that** the fourth plane (76) intersects the third plane (74) at an angle of between 30° and 60°.

8. Tool (4) according to claim 7, **characterised in that** the fourth plane (76) intersects the first plane (70) at an angle of between 40° and 50°, preferably 45°, and **in that** the fourth plane (76) intersects that second plane (72) at an angle of between 40° and 50°, preferably 45°, and **in that** the fourth plane (76) intersects the third plane (74) at an angle of between 40° and 50°, preferably 45°.

9. Workstation (1) comprising a tool holder (2) according to any one of claims 1 to 5 and a tool (4) attached thereto according to any one of claims 6 to 8.

10. Workstation (1) according to claim 9, **characterised in that** in the assembled state of the workstation (1), the first (60), second (62), third (64) and fourth (66) planes of the tool holder (2) coincide with the first (70), second (72), third (74) and fourth (76) planes of the tool (4) respectively.

11. Workstation (1) according to either claim 9 or claim 10, **characterised in that** it comprises a film guide (52) having a shoulder (54) which is pushed against a stop of a guide column (56) of the tool (4).

## Revendications

1. Porte-outil (2) comprenant
un corps de base (8) ;
un élément de butée (10), qui dépasse vers le haut du corps de base (8) et définit une première surface de butée (18) pour un outil (4), la première surface de butée (18) se situant dans un premier plan (60) du porte-outil (2) ;
deux éléments de guidage (12), qui dépassent vers le haut du corps de base (8), pour des sections de guidage (36) de l'outil (4), chaque élément de guidage (12) présentant deux branches (14, 16), dont chacune des premières branches (14) s'étend perpendiculairement vers le haut du corps de base (8) et chacune des secondes branches (16) bifurque de cette dernière sous un angle droit, de telle sorte que les secondes branches (16) des deux éléments de guidage (12) sont tournées l'une vers l'autre ;
l'une des premières branches (14) définissant une deuxième surface de butée (20) pour l'outil (4), située dans un deuxième plan (62) du porte-outïl (2), lequel plan est perpendiculaire au premier plan (60) du porte-outil (2) ;
et la seconde branche correspondante (16) définissant une troisième surface de butée (22) pour l'outil (4), située dans un troisième plan (64) du porte-outil (2), lequel plan est perpendiculaire au premier plan (60) et au deuxième plan (62) du porte-outil (2) ; et comprenant
un axe (24), qui peut s'encastrer dans le corps de base (8) et sortir de ce dernier, et sert à l'introduction dans un logement (42) de l'outil (4), l'axe (24) présentant une surface de pression active (26) oblique, qui définit un quatrième plan (66) coupant chacun des trois plans (60, 62, 64) du porte-outil (2), le quatrième plan (66) coupant le premier plan (60) et le troisième plan (64) sous un angle aigu ;
**caractérisé en ce que**
le quatrième plan (66) coupe également le deuxième plan (62) du porte-outil sous un angle aigu, de sorte que la sortie de l'axe (24) fournit une composante de force en direction de chacune des trois surfaces de butée (18, 20, 22).

2. Porte-outil (2) suivant la revendication 1, **caractérisé en ce que** le quatrième plan (66) coupe le premier plan (60) sous un angle compris entre 30° et 60°, que le quatrième plan (66) coupe le deuxième plan (62) sous un angle compris entre 30° et 60°, et que le quatrième plan (66) coupe le troisième plan (64) sous un angle compris entre 30° et 60°.

3. Porte-outil (2) suivant la revendication 2, **caractérisé en ce que** le quatrième plan (66) coupe le premier plan (60) sous un angle compris entre 40° et 50°, de préférence de 45°, que le quatrième plan (66) coupe le deuxième plan (62) sous un angle compris entre 40° et 50°, de préférence de 45°, et que le quatrième plan (66) coupe le troisième plan (64) sous en angle compris entre 40° et 50°, de préférence de 45°.

4. Porte-outil (2) suivant l'une des revendications précédentes, **caractérisé en ce qu'**il présente un mécanisme de sortie (28) pour l'axe (24), lequel mécanisme comporte une broche filetée (46).

5. Porte-outil (2) suivant la revendication 4, **caractérisé en ce que** la broche filetée (46) est disposée parallèlement au troisième plan (64) du porte-outil (2) et présente sur son extrémité avant une pointe conique (48), qui agit sur une surface active (50) oblique de l'axe (24).

6. Outil (4) destiné au raccordement dans un porte-outil (2), comprenant
un corps de base (32) avec une première surface d'épaulement (34), située dans un premier plan (70) de l'outil (4) ;
deux sections de guidage (36), dépassant latéralement en direction opposée du corps de base (32), pour le logement dans des éléments de guidage (12) du porte-outil (2),
l'une des sections de guidage (36) présentant une deuxième surface d'épaulement (38), située dans un deuxième plan (72) de l'outil (4), lequel plan est perpendiculaire au premier plan (70),
et cette section de guidage (36) présentant une troisième surface d'épaulement (40), située dans un troisième plan (74) de l'outil (4), lequel plan est perpendiculaire au premier plan (70) et au deuxième plan (72) de l'outil (4) ; et comprenant
un logement (42), disposé dans le corps de base (32), pour un axe (24) du porte-outil (2), le logement (42) présentant une surface de pression passive (44) oblique, qui définit un quatrième plan (76) coupant chacun des trois plans (70, 72, 74) de l'outil (4), le quatrième plan (76) coupant le premier plan (70) et le troisième plan (74) sous un angle aigu,
**caractérisé en ce que**
le quatrième plan (76) coupe également le deuxième plan (72) de l'outil sous un angle aigu.

7. Outil (4) suivant la revendication 6, **caractérisé en ce que** le quatrième plan (76) coupe le premier plan (70) sous un angle compris entre 30° et 60°, que le quatrième plan (76) coupe le deuxième plan (72) sous un angle compris entre 30° et 60°, et que le quatrième plan (76) coupe le troisième plan (74) sous un angle compris entre 30° et 60°.

8. Outil (4) suivant la revendication 7, **caractérisé en ce que** le quatrième plan (76) coupe le premier plan (70) sous un angle compris entre 40° et 50°, de préférence de 45°, que le quatrième plan (76) coupe le deuxième plan (72) sous un angle compris entre 40° et 50°, de préférence de 45°, et que le quatrième plan (76) coupe le troisième plan (74) sous un angle compris entre 40° et 50°, de préférence de 45°.

9. Poste de travail (1) comprenant un porte-outil (2) suivant l'une des revendications 1 à 5 et un outil (4), fixé sur ce dernier, suivant l'une des revendications 6 à 8.

10. Poste de travail (1) suivant la revendication 9, **caractérisé en ce que** le premier (60), le deuxième (62), le troisième (64) et le quatrième (66) plans du porte-outil (2) coïncident chacun, dans l'état d'assemblage du poste de travail (1), avec le premier (70), le deuxième (72), le troisième (74) et le quatrième (76) plans de l'outil (4).

11. Poste de travail (1) suivant l'une des revendications 9 et 10, **caractérisé en ce qu'**il présente un guidage de feuille (52) pourvu d'un épaulement (54), qui est pressé sur une butée d'une colonne de guidage (56) de l'outil (4).
